# EUROPÄISCHE PATENTSCHRIFT

(11) **EP 2 640 613 B1**
(45) Veröffentlichungstag und Bekanntmachung des Hinweises auf die Patenterteilung: **07.01.2015**
(21) Anmeldenummer: 11784423.3
(22) Anmeldetag: 11.11.2011
(51) Int. Cl.: B60S 1/38, B60S 1/40

(54) **VERBINDUNGSANORDNUNG UND VERFAHREN ZUM VERBINDEN EINES WISCHBLATTS MIT EINEM WISCHARM FÜR EINE SCHEIBENWISCHANLAGE EINES FAHRZEUGS**
CONNECTING DEVICE TO CONNECT A WIPER BLADE WITH A WIPERARM OF A WIPER DEVICE OF A VEHICLE
DISPOSITIF DE CONNECTION POUR CONNECTER UN BALAI A UN BRAS D'ESSUIE GLACE D'UN SYSTEME D'ESSUYAGE DE VEHICULE

(30) Priorität: 16.11.2010 DE 102010052315
(43) Veröffentlichungstag der Anmeldung: 25.09.2013
(73) Patentinhaber: Daimler AG, 70327 Stuttgart (DE)
(72) Erfinder: DÜSTERHÖFT, Richard, 71088 Holzgerlingen (DE); NESTLER, Christina, 75395 Ostelsheim (DE); SCHMID, Heiko, 71739 Oberriexingen (DE)
(74) Vertreter: JENSEN & SON
(86) Internationale Anmeldenummer: PCT/EP2011/005660
(87) Internationale Veröffentlichungsnummer: WO 2012/065699

(56) Entgegenhaltungen:
- EP-A1- 1 876 073
- DE-A1-102005 016 485
- DE-A1-102008 011 449
- DE-A1-102008 049 272
- DE-T2- 69 101 340
- DE-U1- 20 122 773

## Beschreibung

Die Erfindung betrifft eine Verbindungsanordnung zum Verbinden eines Wischblatts mit einem Wischarm für eine Scheibenwischanlage eines Fahrzeugs. Die Verbindungsanordnung umfasst ein zum Halten des Wischblatts ausgebildetes Anbindungselement, welches an den Wischarm in eine Montagerichtung montierbar ist, welche quer zu einer durch die Wischbewegung des Wischblatts definierbaren Wischfläche verläuft. Wenigstens ein Sicherungselement der Verbindungsanordnung dient dem lagegesicherten Halten des Anbindungselements an dem Wischarm. Des Weiteren betrifft die Erfindung ein Verfahren zum Verbinden eines Wischblatts mit einem Wischarm einer Scheibenwischanlage eines Fahrzeugs.

Die DE 691 01 340 T2 beschreibt eine Gelenkverbindung zwischen einem Wischarm und einem Wischblatt. In dem Wischarm, welcher im Querschnitt ein U-Profil aufweist, ist eine Öffnung zur Aufnahme eines Riegels vorgesehen, welcher entlang des Wischarms verschiebbar ist. Wenn der Riegel vom freien Ende des Wischarms weg, also nach hinten geschoben wird, so gibt eine an dem Riegel vorgesehene Aufnahme eine Gelenkachse frei, welche zwei Längswände eines Futters miteinander verbindet. Das Futter ist hierbei in eine Öffnung eingeschoben, welche in einem Hauptbügel des Wischblatts ausgebildet ist, wobei an dem Futter ausgebildete Klammern in am Hauptbügel vorgesehene Aussparungen einrasten.

Die DE 101 30 903 A1 beschreibt einen Wischarm einer Scheibenwischanlage für ein Fahrzeug, dessen Endbereich im Querschnitt ein U-Profil aufweist, welches nach unten hin offen ist. Ein Adapter, welcher ein Wischblatt hält, ist von unten in den Endbereich des Wischarms einführbar, also in eine Montagerichtung, welche senkrecht zu einer durch die Wischbewegung des Wischblatts definierbaren Wischfläche verläuft. In Seitenwänden des Adapters sind Aussparungen vorgesehen, deren Innenmaße den Außenmaßen von Vorsprüngen entsprechen, welche von Schenkeln des Wischarms seitlich und nach innen weisend abstehen. Beim Einführen des Adapters in den Endbereich des Wischarms in die Montagerichtung bewegen sich also die Vorsprünge entlang der Aussparungen. Zum Verriegeln des Adapters gegenüber dem Wischarm wird der Adapter zusammen mit dem Wischblatt hin zu einem offenen Ende des Wischarms verschoben, und die Vorsprünge am Wischarm gelangen in Rastnischen, welche am Adapter vorgesehen sind. Eine an dem Adapter angeordnete Rastzunge ist in dieser lagegesicherten Position des Adapters in eine am Wischarm angeordnete Aussparung eingebracht und zeigt so an, dass der Adapter seine Betriebsstellung erreicht hat.

Die DE 10 2008 011 449 A1 beschreibt ebenfalls eine Verbindung eines Wischblatts mit einem Wischarm mittels eines wischblattseitigen Adapters, welcher von unten in einen Endbereich des Wischarms eingeführt wird. Anschließend wird der Adapter zusammen mit dem Wischblatt zu einem Ende des Wischarms hin seitlich verschoben, um ein Verriegeln des Adapters gegenüber dem Wischarm und damit das Einnehmen einer Funktionsstellung des Adapters zu erreichen.

Als nachteilig bei derartigen Verbindungsanordnungen ist der Umstand anzusehen, dass das Sichern des Adapters in seiner Lage bezüglich des Wischarms eine mühselige Handhabung des Adapters erfordert.

Die DE 10 2005 016 485 A1 beschreibt eine Vorrichtung zum gelenkigen Verbinden eines Wischblatts mit einem Wischarm einer Scheibenwischanlage. Ein Endbereich des Wischarms ist als nach unten hin offener, quaderförmiger Hohlkörper ausgebildet, von dessen Seitenwänden zwei Vorsprünge nach innen vorstehen. Ein Adapter zum Halten eines Wischblatts weist zwei Rastzungen auf, welche beim Einschieben des Adapters in den wischarmseitigen Hohlkörper von unten mit den beiden Vorsprüngen verrasten. Ein weiterer, an einer Seitenwand des Hohlkörpers ausgebildeter und nach innen vorstehender Vorsprung greift in eine Vertiefung ein, welche in dem Adapter vorgesehen ist. Auf diese Weise ist der Adapter lagegesichert an dem Endbereich des Wischarms gehalten.

Eine solche Verbindungsanordnung ist vergleichsweise aufwändig, und zudem ist das Demontieren des Adapters und mit diesem des Wischblatts von dem Wischarm schwierig.

Dokument DE-20122773-U, offenbart eine Verbidungsanordnung wie im ersten Teil des Anspruchs 1 offenbart.

Aufgabe der vorliegenden Erfindung ist es daher, eine Verbindungsanordnung der eingangs genannten Art sowie ein entsprechendes Verfahren zu schaffen, welche bzw. welches ein besonders einfaches und funktionssicheres Verbinden eines Wischblatts mit einem Wischarm einer Scheibenwischanlage ermöglicht.

Diese Aufgabe wird durch eine Verbindungsanordnung mit den Merkmalen eines Patentanspruchs 1 und durch ein Verfahren mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Die erfindungsgemäße Verbindungsanordnung zum Verbinden eines Wischblatts mit einem Wischarm einer Scheibenwischanlage eines Fahrzeugs umfasst ein zum Halten des Wischblatts ausgebildetes Anbindungselement. Das Anbindungselement ist an den Wischarm in eine Montagerichtung montierbar, welche quer zu einer durch die Wischbewegung des Wischblatts definierbaren Wischfläche verläuft. Ein Sicherungselement der Verbindungsanordnung, welches dem lagegesicherten Halten des Anbindungselements an dem Wischarm dient, ist als an dem Wischarm angeordneter und im Querschnitt ein U-Profil aufweisender Schieber ausgebildet, welcher entlang des Wischarms aus einer Montagestellung in eine das Anbindungselement sichernde Funktionsstellung verschiebbar ist. Ein besonders einfaches und funktionssicheres Verbinden des Wischblatts mit dem Wischarm wird hierbei dadurch erreicht, dass zum Festlegen des Wischblatts am Wischarm nicht das Anbindungselement zusammen mit dem Wischblatt aus der Montagestellung in die Funktionsstellung verschoben zu werden braucht. Vielmehr verbleibt das Anbindungselement in seiner Montagestellung, während lediglich der Schieber entlang des Wischarms verschoben wird, um das Anbindungselement gegen ein Sich-Lösen von dem Wischarm zu sichern. Dies erleichtert die Handhabung des Wischblatts beim Montieren an den oder beim Demontieren von dem Wischarm bedeutend.

Hierbei weist der Schieber einen Rücken und zwei Schenkel auf, wobei an den Schenkeln des Schiebers wenigstens ein den Wischarm unterseitig umgreifender Vorsprung angeordnet ist. Ein solcher Schieber stellt einen Aufschlagschutz bereit, wenn der Wischarm ohne an diesen montiertes Wischblatt auf die Scheibe aufschlägt, etwa aufgrund einer Unachtsamkeit einer Bedienperson nach dem Demontieren des Wischblatts vom Wischarm. Ein solcher Aufschlagschutz ist insbesondere dann besonders wirkungsvoll, wenn der Wischarm aus einem Metall gebildet ist und der Schieber aus einem nachgiebigeren Material, etwa aus Kunststoff. Zudem ist durch den Schieber, welcher den Wischarm unterseitig umgreift, eine besonders gute Führung des Schiebers entlang des Wischarms gewährleistet.

Die Montage eines das Anbindungselement aufweisenden Wischblatts an den Wischarm erfolgt hierbei durch eine Bedienperson besonders einfach und intuitiv, wodurch eine besonders große Sicherheit gegen eine Fehlmontage gegeben ist. Zum Demontieren des Wischblatts braucht der Schieber lediglich aus der das Anbindungselement sichernden Funktionsstellung in die Montagestellung verbracht zu werden, und anschließend können das Anbindungselement und mit diesem das Wischblatt entgegen der Montagerichtung von dem Wischarm abgezogen werden.

Da bei sich auf der Scheibe des Fahrzeugs befindendem Wischblatt auf den Wischarm eine Anpresskraft wirkt, welche das Wischblatt gegen die Scheibe drückt, kann der Wischarm auch dann das Wischblatt sicher über die Scheibe bewegen, wenn sich der Schieber nicht in der Funktionsstellung, sondern in der Montagestellung befindet. Dies gilt auch, wenn der Schieber defekt ist, sodass er selbst in der Funktionsstellung das Anbindungselement nicht wie gewünscht sichert.

Die vorliegend beschriebene Verbindungsanordnung lässt sich zudem mit einem vergleichsweise kleinen Anbindungselement realisieren. Dies ist insofern vorteilhaft, als bei einem einen kleinen Bauraumbedarf mit sich bringenden Anbindungselement auch bei Niederschlag oder beim Beaufschlagen der Scheibe mit Waschflüssigkeit nur ein geringer Wasserabwurf vom Anbindungselement auf die Scheibe des Fahrzeugs erfolgt.

In einer vorteilhaften Ausgestaltung der Erfindung steht ein Endbereich des Schiebers in der Montagestellung über einen Endbereich des Wischarms über. Dadurch kann eine Bedienperson sehr leicht zu erkennen, ob sich der Schieber in der Montagestellung oder in der das Anbindungselement sichernden Funktionsstellung befindet.

Von Vorteil ist es weiterhin, wenn der Wischarm wenigstens eine Rastkerbe aufweist, welche in der Funktionsstellung und/oder in der Montagestellung des Schiebers mit einer an dem Schieber angeordneten Rastnase in Eingriff ist. Das Einrasten der Rastnase in der Rastkerbe ist nämlich sowohl optisch wahrnehmbar als auch hörbar und spürbar. Auf diese Weise kann der Bedienperson eine Rückmeldung übermittelt werden, dass sich der Schieber in der Funktionsstellung beziehungsweise in der Montagestellung befindet. Besonders günstig ist es, wenn ein und dieselbe Rastnase in der Funktionsstellung mit einer ersten Rastkerbe und in der Montagestellung mit einer zweiten Rastkerbe in Eingriff ist. Alternativ kann jedoch auch lediglich eine Rastkerbe vorgesehen sein, welche einer der beiden Stellungen zugeordnet ist. Auch können der Wischarm die Rastnase und der Schieber die Rastkerben aufweisen.

In einer weiteren vorteilhaften Ausgestaltung der Erfindung weist der Wischarm zumindest im Bereich des Anbindungselements im Querschnitt ein U-Profil auf, wobei an einem Rücken des Wischarms eine Durchtrittsöffnung angeordnet ist, in welcher in der Montagestellung ein korrespondierender Vorsprung des Anbindungselements aufgenommen ist. Wenn der Vorsprung, dessen Außenmaße den Innenmaßen der Durchtrittsöffnung entsprechen, in der Durchtrittsöffnung aufgenommen ist, so ist sichergestellt, dass sich das Anbindungselement und mit diesem das Wischblatt weder in Richtung der Längserstreckung des Wischarms noch quer zu dieser Längsstreckungsrichtung bewegen kann. Mit anderen Worten sind das Anbindungselement und mit diesem das Wischblatt in der Ebene der Wischfläche durch eine solche Passung des Vorsprungs und der mit diesem korrespondierenden Durchtrittsöffnung in ihrer Lage gesichert und fixiert. Zudem kann an dem Hindurchtreten des Vorsprungs durch die Durchtrittsöffnung von der Bedienperson erkannt werden, dass sich das Anbindungselement in der korrekten Montagestellung befindet, in welcher ein Verschieben des Schiebers in die das Anbindungselement sichernde Funktionsstellung möglich ist.

Wenn der Vorsprung und die Durchtrittsöffnung eine von der kreisrunden Form abweichende Formgebung aufweisen, etwa indem der Vorsprung und die Durchtrittsöffnung oval oder eckig, insbesondere rechteckig oder quadratisch, ausgebildet sind, so lässt es sich durch das In-Eingriff-Bringen des Vorsprungs in die Durchtrittsöffnung zudem eine Verdrehsicherung des Anbindungselements gegenüber dem Wischarm realisieren.

Bevorzugt weist zumindest ein Teilbereich des Vorsprungs eine Kontur auf, welche einer Kontur einer an dem Schieber vorgesehenen Ausnehmung gleich ist, wobei zumindest der Teilbereich des Vorsprungs in der Funktionsstellung des Schiebers mit der Ausnehmung in Anlage ist. Auf diese Weise kann durch das In-Anlage-Bringen des Schiebers mit dem Teilbereich des Vorsprungs optisch kontrolliert werden, ob der Schieber die Funktionsstellung erreicht hat. Solange nämlich zwischen der die Ausnehmung an dem Schieber begrenzenden Kontur und der Kontur des Teilbereichs des Vorsprungs noch ein Abstand besteht, ist dies nicht der Fall.

Als weiter vorteilhaft hat es sich gezeigt, wenn die Durchtrittsöffnung und der mit dieser korrespondierende Vorsprung für einen jeweiligen Anbringungsort des Wischarms am Fahrzeug spezifisch ausgebildet sind. So kann die Geometrie der Durchtrittsöffnung und des Vorsprungs für einen fahrerseitigen Wischarm und das zugehörige Wischblatt von der Geometrie für einen beifahrerseitigen Wischarm und das zugehörige Wischblatt abweichen. Auch kann für einen Wischarm für ein Fahrzeug mit auf der rechten Seite angeordnetem Lenkrad oder auf der linken Seite angeordneten Lenkrad eine jeweils spezifische Geometrie der Durchtrittsöffnung und des Vorsprungs vorgesehen werden, um sicherzustellen, dass nur das tatsächlich zugehörige Wischblatt an dem dafür vorgesehenen Wischarm montiert werden kann. Ein derartiger Vertauschschutz kann auch vorgesehen sein, um den Wischarm und das Wischblatt eines Heckscheibenwischers von einem Wischarm und dem Wischblatt eines Frontscheibenwischers unterscheiden zu können.

Von Vorteil ist es weiterhin, wenn der Schieber eine Stirnwand umfasst, mittels welcher in der Funktionsstellung ein offener Endbereich des Wischarms zumindest bereichsweise verschließbar ist. Damit schützt der Schieber das im Endbereich des Wischarms aufgenommene Anbindungselement, und zugleich ist ein optisch ansprechender Abschluss des Endbereichs des Wischarms bereitgestellt. Darüber hinaus schützt die nach vorne, also in Längserstreckungsrichtung des Wischarms diesen abschließende Stirnwand die Scheibe besonders weitgehend, wenn der kein Wischblatt aufweisende Wischarm versehentlich auf diese aufschlägt.

Um eine besonders sichere Fixierung des Anbindungselements an dem Wischarm in der Montagestellung zu erreichen, kann es gemäß einer weiteren vorteilhaften Ausgestaltung der Erfindung vorgesehen sein, dass der Wischarm wenigstens eine in die Montagerichtung offene Ausnehmung aufweist, welche zum Aufnehmen eines an dem Anbindungselement ausgebildeten korrespondieren Vorsprungs ausgebildet ist.

Als weiter vorteilhaft hat es sich gezeigt, wenn das Anbindungselement ein das Wischblatt haltendes Unterteil und ein in der Funktionsstellung an dem Wischarm festgelegtes Oberteil umfasst, wobei das Unterteil relativ zu dem Oberteil bewegbar an diesem gehalten ist. Dadurch kann sich das Wischblatt beim Wischen der in der Regel sphärisch gekrümmten Scheibe dem Verlauf der Schreibenoberfläche anpassen. Dadurch dass die verschleißanfälligen Teile, welche die Relativbewegung zwischen Wischarm und Wischblatt zulassen, Teile des Anbindungselements sind, werden diese beim Austauschen des Wischblatts zusammen mit dem Anbindungselement ebenfalls ausgetauscht. Dadurch wird sichergestellt, dass die Relativbewegung zwischen Wischblatt und Wischarm leichtgängig bleibt.

Das Oberteil ist bevorzugt als Wippe ausgebildet, welche auf einem durch eine Durchgangsöffnung in dem Unterteil hindurchgeführten Stift oder Lagerbolzen drehbar gelagert ist. Eine solche Lagerung des Oberteils an dem Unterteil sorgt für eine besonders gute Leichtgängigkeit bei der Relativbewegung zwischen Wischarm und Wischblatt.

Bevorzugt sorgt wenigstens ein an dem Unterteil ausgebildeter Anschlag für ein Begrenzen der Relativbewegung des Oberteils gegenüber dem Unterteil. Durch Anschläge kann nämlich die Relativbewegung des Wischblatts gegenüber dem Wischarm besonders einfach auf das notwendige, geringe Maß begrenzt werden.

Wenn der Wischarm gemäß einer weiteren vorteilhaften Ausgestaltung der Erfindung in der Funktionsstellung mit Seitenwänden des Oberteils in Anlage ist, sorgt dies ebenfalls für eine besonders sichere, insbesondere verdrehsichere, Festlegung des Anbindungselements an dem Wischarm.

Schließlich hat es sich als vorteilhaft gezeigt, wenn der Schieber und/oder der Wischarm eine Aussparung aufweisen, welche bei einer Bewegung des Wischblatts relativ zu dem Wischarm zum Aufnehmen einer Komponente des Wischblatts ausgebildet ist. So können der Schieber und der Wischarm auf in optischer und in akustischer Hinsicht vorteilhafte Art und Weise besonders weitgehend geschlossen sein, und dennoch ist durch die Aussparungen die Relativbewegung des Wischblatts gegenüber dem Wischarm ermöglicht.

Bei dem erfindungsgemäßen Verfahren zum Verbinden eines Wischblatts mit einem Wischarm einer Scheibenwischanlage eines Fahrzeugs wird ein zum Halten des Wischblatts ausgebildetes Anbindungselement an den Wischarm in eine Montagerichtung montiert, welche quer zu einer durch die Wischbewegung des Wischblatts definierbaren Wischfläche verläuft. Mittels wenigstens eines Sicherungselements wird das Anbindungselement an dem Wischarm lagegesichert gehalten. Hierbei wird als Sicherungselement ein an dem Wischarm angeordneter im Querschnitt ein U-Profil aufweisender Schieber entlang des Wischarms aus einer Montagestellung in eine das Anbindungselement sichernde Funktionsstellung verschoben.

Die für die erfindungsgemäße Verbindungsanordnung beschriebenen Vorteile und bevorzugten Ausführungsformen gelten auch für das erfindungsgemäße Verfahren.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: ausschnittsweise einen Wischarm einer Scheibenwischanlage eines Fahrzeugs mit einem an dem Wischarm befestigten Wischblatt, wobei ein Schieberiegel einen das Wischblatt haltenden Adapter fixiert;
- Fig. 2: das Wischblatt gemäß Fig. 1 mit dem eine Wippe und einen Reiter umfassenden Adapter;
- Fig. 3: den Wischarm sowie den von dem Wischarm abgezogenen Schieberiegel in einer perspektivischen Ansicht;
- Fig. 4: eine unterseitige Ansicht des Schieberiegels;
- Fig. 5: eine Explosionsdarstellung von Komponenten des Adapters;
- Fig. 6: in einer Ansicht von unten auf die in einem Endbereich des Wischarms aufgenommene Wippe des Adapters, welche durch den in seine Funktionsstellung verschobenen Schieberiegel in ihrer Lage gesichert ist;
- Fig. 7: den Wischarm mit nach vorne in eine Demontagestellung verschobenem Schieberiegel, in welcher der Adapter aus dem Endbereich des Wischarms durch Ziehen nach unten entfernbar ist;
- Fig. 8: eine Ansicht von unten auf den Endbereich des Wischarms mit der in diesem aufgenommenen Wippe, wobei der Schieberiegel in die in Fig. 7 gezeigte Demontagestellung verschoben ist;
- Fig. 9: den aus dem Endbereich des Wischarms nach unten abgezogenen und das Wischblatt haltenden Adapter sowie den Wischarm mit dem Schieberiegel in seiner Demontagestellung;
- Fig. 10: eine Seitenansicht des Wischarms mit dem an diesem gehaltenen Wischblatt; und
- Fig. 11: eine alternative Ausbildung eines Wischarms mit an diesem angeordnetem Wischblatt, welches durch einen wischarmspezifischen Adapter gehalten ist.

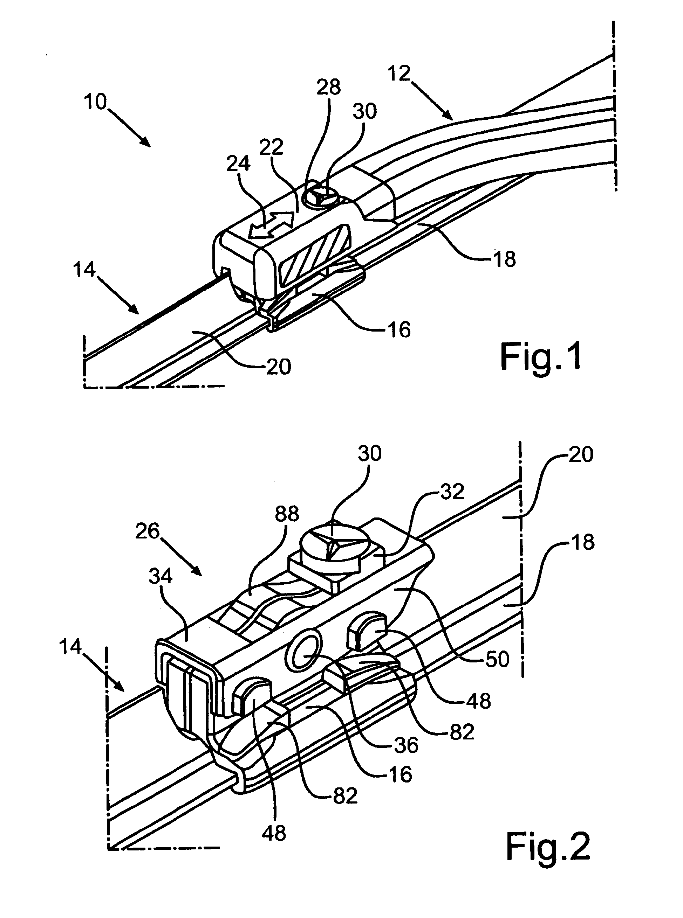

Von einer Scheibenwischanlage 10 eines Fahrzeugs sind in Fig. 1 ausschnittsweise ein Wischarm 12 und ein Wischblatt 14 gezeigt. Von einem Adapter 26 (vgl. Fig. 2), der in einem als Aufnahmebereich ausgebildeten Endbereich des Wischarms 12 aufgenommen ist, ist in Fig. 1 nur ein als Reiter 16 ausgebildetes Unterteil gezeigt, welches Federschienen 18 des Wischblatts 14 umgreift und somit das Wischblatt 14 hält. Das Wischblatt 14 umfasst des weiteren einen Spoiler 20, sowie einen (in Fig. 1 nicht gezeigten) Wischgummi zum Wischen einer (ebenfalls nicht gezeigten) Scheibe des Fahrzeugs.

Um den Adapter 26 sicher am Wischarm 12 zu halten, ist an dem Wischarm 12 ein Schieberiegel 22 angeordnet, welcher in eine Längserstreckungsrichtung des Wischarms 12 verschiebbar an diesem gehalten ist. Ein auf den Schieberiegel 22 aufgebrachtes Pfeilsymbol 24 in Form eines Doppelpfeils gibt die Richtungen an, in welche der Schieberiegel 22 gegenüber dem Wischarm 12 verschiebbar ist.

In einer in Fig. 1 gezeigten Funktionsstellung des Schieberiegels 22 sorgt dieser dafür, dass der Adapter 26 (vgl. Fig. 2) und mit diesem das Wischblatt 14 nicht von dem Wischarm 12 abgezogen werden können. In dieser Funktionsstellung des Schieberiegels 22 ist eine an dem Schieberiegel 22 vorgesehene, eine halbkreisförmige Kontur aufweisende Ausnehmung 28 in Anlage mit einem zylindrischen Teilbereich 30 eines Vorsprungs 32, welcher nach oben über einen Grundkörper einer Wippe 34 des Adapters 26 vorsteht (vgl. Fig. 2).

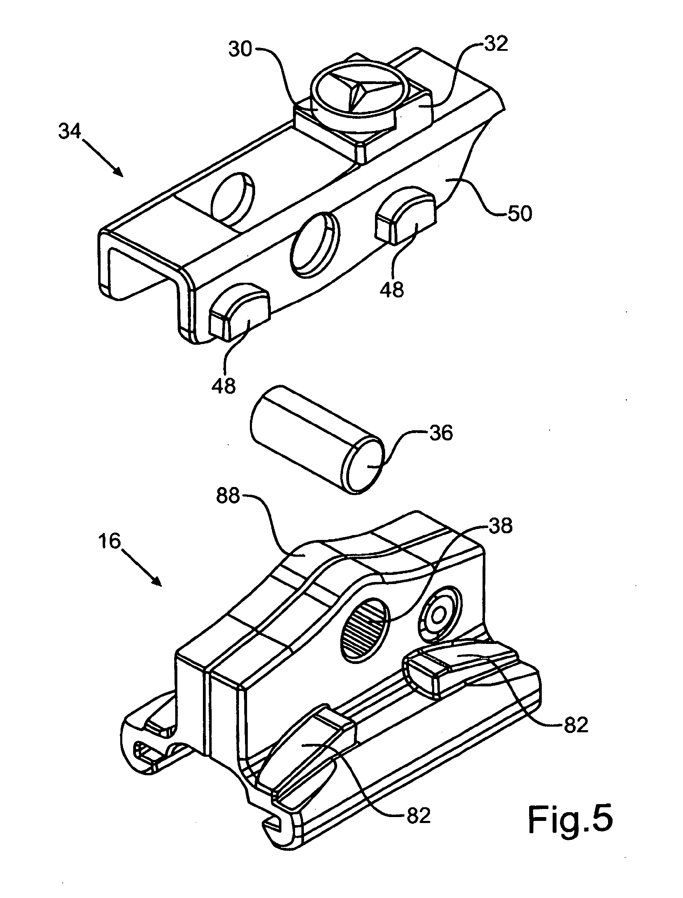

Fig. 2 zeigt die Wippe 34, welche als Oberteil des mehrteiligen Adapters 26 ausgebildet ist, ohne den die Wippe 34 verdeckenden Schieberiegel 22. Die Wippe 34 ist auf einem stiftförmigen Lagerbolzen 36 gelagert, welcher durch eine in dem Reiter 16 vorgesehene Durchgangsöffnung 38 (vgl. Fig. 5) hindurchgeführt ist. In der Durchgangsöffnung 38 können Rippen vorgesehen sein, um den Lagerbolzen 36 drehfest in dieser zu fixieren (vgl. Fig. 5).

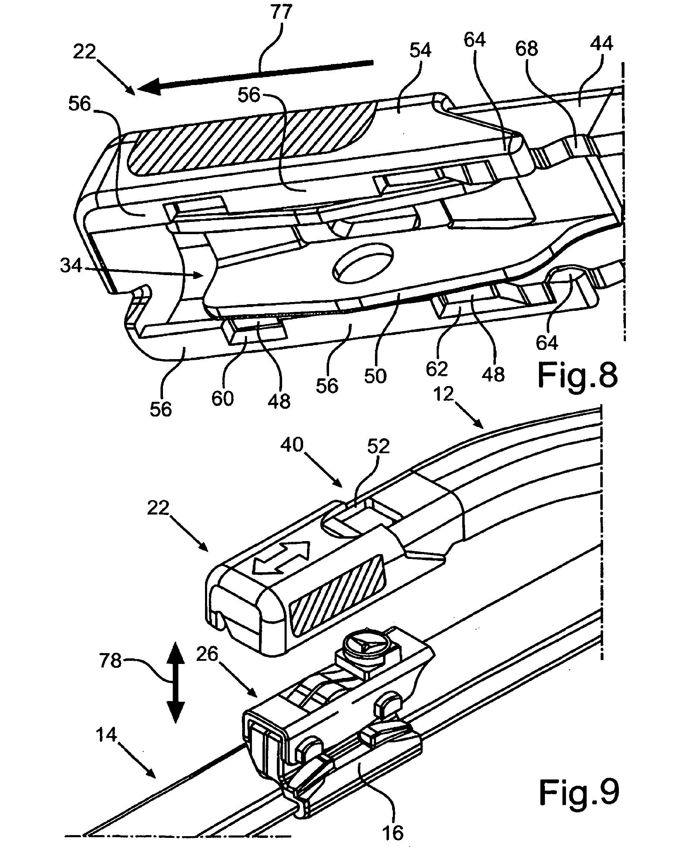

Wenn das Wischblatt 14 mittels des diesen haltenden Adapters 26 an dem Wischarm 12 in dessen Endbereich 40 aufgenommen werden soll, wird es von unten in den nach unten hin offenen Endbereich 40 des Wischarms 12 eingeführt (vgl. Fig. 9). Hierfür wird zunächst der Schieberiegel 22 in eine in Fig. 9 gezeigte, das Montieren des Adapters 26 ermöglichende Montagestellung verschoben, welche ebenso eine das Demontieren des Adapters 26 ermöglichende Demontagestellung ist.

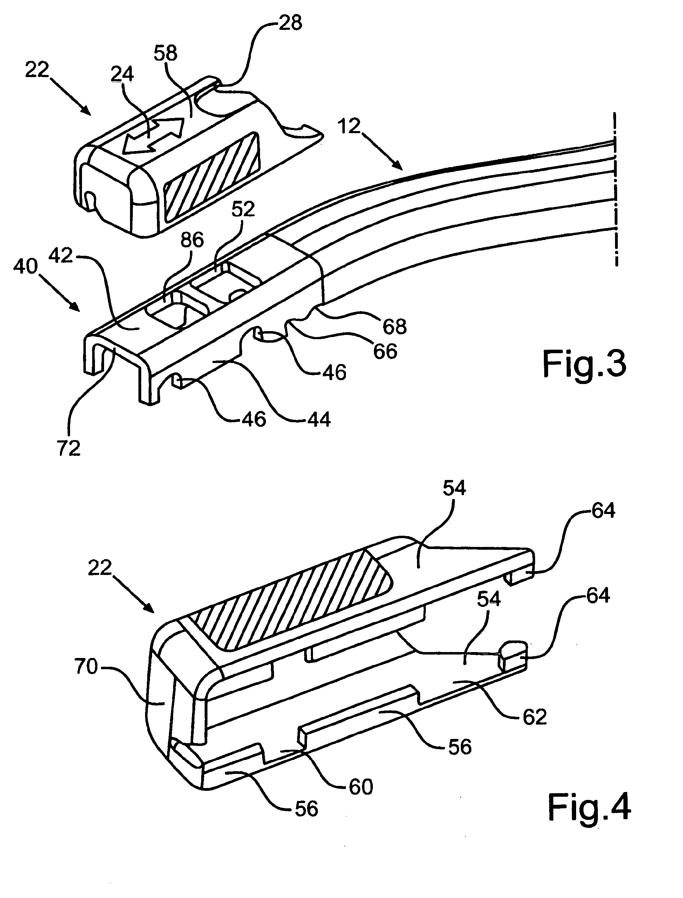

Wie aus Fig. 3 hervorgeht, weist der Endbereich 40 des Wischarms 12 im Querschnitt ein U-Profil auf, welches einen Rücken 42 und zwei sich von dem Rücken 42 nach unten erstreckende Schenkel 44 umfasst. Die Schenkel 44 weisen jeweils zwei nach unten offene Ausnehmungen 46 auf, welche bei in den Endbereich 40 eingebrachtem Adapter 26 zwei Riegelwarzen 48 aufnehmen, welche über jeweilige Seitenwände 50 der Wippe 34 überstehen (vgl. Fig. 2).

Wenn die vier Riegelwarzen 48 in den vier mit diesen korrespondierenden Ausnehmungen 46 in den beiden Schenkeln 44 des Endbereichs 40 des Wischarms 12 aufgenommen sind, lässt sich der Adapter 26 nicht mehr in Richtung der Längserstreckung des Wischarms 12 bewegen. Zudem tritt dann der Vorsprung 32 der Wippe 34 durch eine Durchtrittsöffnung 52 hindurch, welche im Rücken 42 des Wischarms 12 ausgebildet ist. Eine weitere Ausnehmung 86 im Rücken 42 des Wischarms 12 dient zum Aufnehmen einer Erhebung 88 des Reiters 16, welche dieser im Bereich der Durchgangsöffnung 38 aufweist (vgl. Fig. 3 und Fig. 5).

Wenn der Adapter 26 in den Endbereich 40 des Wischarms 12 eingeschoben ist, befinden sich die Seitenwände 50 der Wippe 34 mit den Innenseiten der Schenkel 44 in Anlage. Dadurch ist auch in eine Richtung quer zu der Erstreckungsrichtung des Wischarms 12, also quer zu der Längserstreckungsrichtung des Wischblatts 14, eine Fixierung des Adapters 26 an dem Wischarm 12 sichergestellt.

Des Weiteren sorgt der Schieberiegel 22 dafür, dass sich der Adapter 26 auch nicht Hochrichtung, also senkrecht zu der durch die Wischbewegung des Wischblatts 14 definierbaren Wischfläche aus dem Aufnahmebereich 40 des Wischarms 12 herausbewegen kann.

Hierfür sind, wie insbesondere Fig. 4 zeigt, an jeweiligen Seitenwänden 54 des im Querschnitt ebenfalls ein U-Profil aufweisenden Schieberiegels 22 zwei Leisten 56 angeordnet, welche von einer Innenseite der jeweiligen Seitenwand 54 nach innen vorspringen. Diese Leisten 56 umgreifen den Wischarm 12 im Endbereich 40 unterseitig und dienen so im Zusammenwirken mit einem die Seitenwände 54 des Schieberiegels 22 verbindenden Rücken 58 (vgl. Fig. 3) als Führung beim translatorischen Verschieben des Schieberiegels 22 relativ zu dem Wischarm 12.

Zudem ruhen die in den Ausnehmungen 46 des Wischarms 12 aufgenommenen Riegelwarzen 48 auf den Leisten 56 des Schieberiegels 22, wenn dieser in seine in Fig. 1 gezeigte Funktionsstellung, also vorliegend nach hinten verschoben ist.

Ein Bereich 60 zwischen den beiden Leisten 56 und Bereich 62 zwischen der hinteren Leiste 56 und einer ebenfalls nach innen von der Seitenwand 54 vorspringenden Rastnase 64 ermöglichen es, bei in die Montagestellung verschobenem Schieberiegel 22 die Riegelwarzen 48 der Wippe 34 in die in den Seitenwänden 44 des Wischarms 12 vorgesehenen Ausnehmungen 46 einzubringen, indem der Adapter 26 von unten in den Endbereich 40 des Wischarms 12 eingeschoben wird.

Die von den Seitenwänden 54 des Schieberiegels 22 nach innen vorstehenden Rastnasen 64 können in vordere Rastkerben 66 oder in hintere Rastkerbenn 68 eingebracht werden, welche in den beiden Schenkeln 44 des Wischarms 12 in dessen Endbereich 40 ausgebildet sind. Befindet sich die jeweilige Rastnase 64 in der vorderen Rastkerbe 66, so steht der Schieberiegel 22 über den Endbereich 40 des Wischarms 12 nach vorne über, und eine vordere Stirnwand 70 des Schieberiegels 22 ist von einem Ende 72 des Wischarms 12 beabstandet (vgl. Fig. 3, Fig. 4 und Fig. 8).

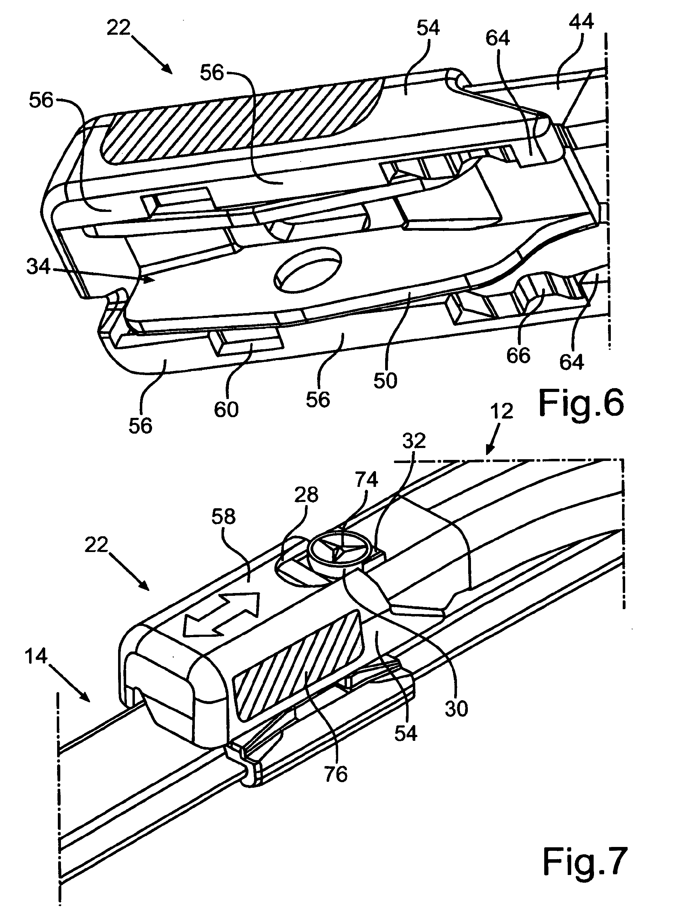

Ist hingegen der Schieberiegel 22 nach hinten geschoben, befindet sich also die Rastnase 64 in der hinteren Rastkerbe 68 (vgl. Fig. 6), so befindet sich die vordere Stirnwand 70 des Schieberiegels 22 mit dem vorderen Ende 72 des Wischarms 12 in Anlage. Das Einrasten der Rastnase 64 in der vorderen Rastkerbe 66 oder in der hinteren Rastkerbe 68 ist von einer Bedienperson, welche den Schieberiegel 22 bedient, deutlich hörbar und fühlbar, also haptisch erfassbar.

Eine weitere, optische Rückmeldung über das Erreichen der das Montieren oder das Demontieren des Adapters 26 aus dem Endbereich 40 des Wischarms 12 ermöglichenden Montagestellung des Schieberiegels 22 ist durch die Position des Teilbereichs 30 gegeben. Der Teilbereich 30, welcher über die Durchtrittsöffnung 52 in dem Rücken 42 des Wischarms 12 hervortritt, ist dann mit der in dem Schieberiegel 22 vorgesehenen Ausnehmung 28 in Anlage, wenn sich die Rastnase 64 in der hinteren Rastkerbe 68 befindet (vgl. Fig. 1 und Fig. 6).

Ist hingegen der Schieberiegel 22 nach vorne gezogen, so befindet sich die Rastnase 64 in der vorderen Rastkerbe 66 (vgl. Fig. 8). Hierbei liegt dann die hintere Rastkerbe 68 frei, und zwischen dem Teilbereich 30 des Vorsprungs 32 und der Ausnehmung 28 in dem Rücken 58 des Schieberiegels 22 besteht ein Abstand (vgl. Fig. 7).

Fig. 6 zeigt den in seine Funktionsstellung verschobenen Schieberiegel 22, welcher die Wippe 34 hält, indem die an den Seitenwänden 50 der Wippe 34 angeordneten Riegelwarzen 48 auf den seitlich nach innen vorstehenden Leisten 56 des Schieberiegels 22 ruhen. In der Funktionsstellung ist die an dem Schieberiegel 22 ausgebildete Rastnase 64 mit der hinteren Rastkerbe 68 in Eingriff, welche sich in dem Schenkel 44 des Wischarms 12 befindet. Die vordere Rastkerbe 66 liegt hingegen frei.

Demgegenüber ist in der in Fig. 7 gezeigten Montagestellung bzw. Demontagestellung des Schieberiegels 22 dieser nach vorne geschoben, und die hintere Rastkerbe 68 liegt frei, während die Rastnase 64 in die vordere Rastkerbe 66 eingebracht ist. Der zylindrische Teilbereich 30 des Vorsprungs 32 der Wippe 34 ist von der halbkreisförmigen Ausnehmung 28 in dem Rücken 58 des Schieberiegels 22 beabstandet.

Der zylindrische Teilbereich 30 kann, wie vorliegend beispielhaft gezeigt, zur besseren Erkennbarkeit ein reliefartig vorstehendes Emblem 74, etwa ein Markenemblem, aufweisen, oder ein solches Emblem 74 kann auf andere Weise an dieser Stelle hervorgehoben sein, etwa durch farbliche Absetzung. Um eine besonders gute Handhabbarkeit des Schieberiegels 22 beim Verschieben gegenüber dem Wischarm 12 zu gewährleisten, weisen die Schenkel 54 des Schieberiegels 22 vorliegend eine Riffelung 76 auf. Fig. 8 zeigt den die Wippe 34 freigebenden Schieberiegel 22, also den in die Montagestellung bzw. Demontagestellung nach vorne verschobenen Schieberiegel 22 (vgl. Fig. 7) in einer perspektivischen Ansicht von unten. Die Verschieberichtung nach vorne ist durch einen Pfeil 77 veranschaulicht. In der Demontagestellung befindend sich die Riegelwarzen 48 auf der Höhe der Bereiche 60, 62, sie ruhen also nicht mehr auf den Leisten 56. Die Rastnase 64 ist in die vordere Rastkerbe 66 eingerastet. Das Einrasten der Rastnase 64 in der vorderen Rastkerbe 66 infolge des Verschiebens nach vorne ist für die Bedienperson deutlich hörbar und spürbar.

Anschließend kann, wie in Fig. 9 gezeigt, der Adapter 26, welcher das Wischblatt 14 mittels des Reiters 16 hält, nach unten, also senkrecht zu durch die Wischbewegung des Wischblatts 14 definierbaren Wischfläche aus dem Endbereich 40 des Wischarms 12 herausgezogen werden.

Die Montagerichtung und die Demontagerichtung sind in Fig. 9 durch einen Bewegungspfeil 78 veranschaulicht. Beim Montieren wird der Adapter 26 und mit diesem das Wischblatt 14 nach oben bewegt, beim Demontieren zum Wechseln eines auszutauschenden Wischblatts 14 entsprechend nach unten.

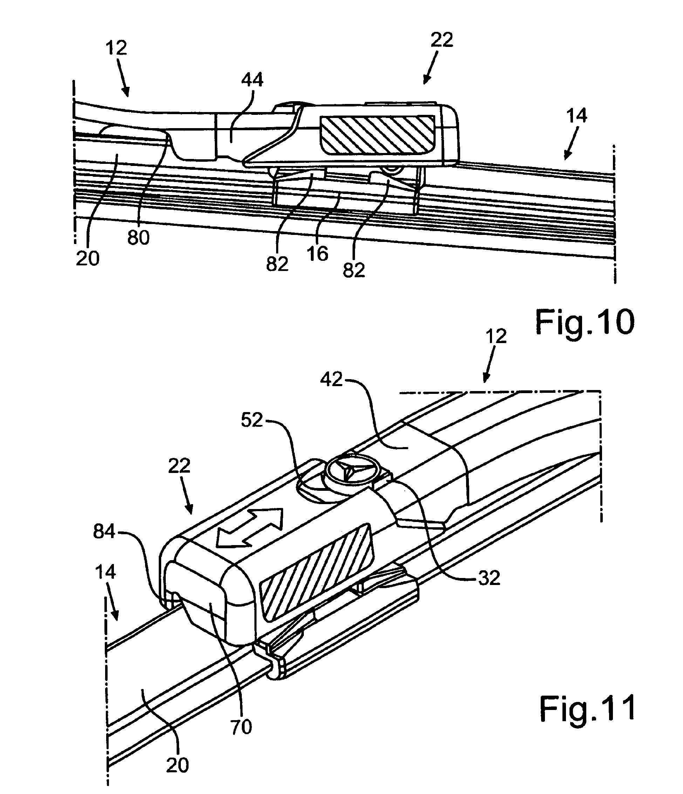

Fig. 10 zeigt den das Wischblatt 14 haltenden Wischarm 12 in einer Seitenansicht, wobei das Wischblatt 14 relativ zu dem Wischarm 12 verkippt ist, und zwar in Folge des Verkippens des Reiters 16 relativ zu der an dem Wischarm 12 anliegenden Wippe 34. Aus dieser Seitenansicht geht hervor, dass einer der Schenkel 44 des Wischarms 12 eine Aussparung 80 aufweist, welche eine mit dem Verkippen des Wischblatts 14 einhergehende Bewegung des Spoilers 20 nach oben zulässt.

Zwei an jeder Seite des Reiters 16 ausgebildete, zu jeweiligen Außenseiten des Reiters 16 hin abgeschrägte Anschläge 82 (vgl. Fig. 5) sorgen für ein Begrenzen der Relativbewegung des Reiters 16 gegenüber der Wippe 34. Das Verkippen des Wischblatts 14 in die der in Fig. 10 gezeigten Richtung entgegengesetzte Richtung bewirkt, dass der Spoiler 20 in seinem vor dem Reiter 16 angeordneten Bereich sich nach oben bewegt. Hierbei sorgt eine in der Stirnwand 70 des Schieberiegels 22 angeordnete Aussparung in Form einer Kerbe 84 dafür, dass die Bewegung des Spoilers 20 nach oben ermöglicht ist (vgl. Fig. 11).

Fig. 11 zeigt schließlich beispielhaft, wie vorliegend durch die geometrische Gestaltung des Vorsprungs 32 der Wippe 34 und die mit diesem Vorsprung 32 korrespondierende Ausnehmung 52 im Rücken 42 des Wischarms 12 eine Fehlmontage verhindert wird. So kann für einen beifahrerseitigen Wischarm 12 und das zu diesem zugehörige Wischblatt 14 eine spezifische, mit dem Anbringungsort des Wischarms 12 korrespondierende Ausbildung des Vorsprungs 32 und der mit diesem korrespondierenden Ausnehmung 52 vorgesehen sein.

Bei der in Fig. 11 gezeigten Ausbildung des Wischarms 12 und der Wippe 34 ist die Ausnehmung 52 nicht rechteckig (wie etwa bei der in Fig. 9 gezeigten Gestaltung von Vorsprung 32 und Ausnehmung 52), sondern der Vorsprung 32 ist in seinem hinteren Bereich rechteckig und in seinem vorderen Bereich halbrund. Entsprechend ist die mit diesem bereichsweise halbrunden Vorsprung 32 korrespondierende Ausnehmung 52 in dem Rücken 42 des Wischarms 12 ebenfalls im vorderen Bereich halbrund und im hinteren Bereich eckig. In alternativen Ausführungsformen können abweichende Gestaltungen von Vorsprung 32 und Ausnehmung 52 für das Sicherstellen eines Vertauschschutzes sorgen.

Die vorliegend gezeigte Verbindungsanordnung zum Verbinden des Wischblatts 14 mit dem Wischarm 12 ist sowohl bei Ausführungen des Wischarms 12 möglich, bei welchen dieser als einfacher Stangenarm ausgebildet ist, als auch bei Wischarmen 12, bei welchen dieser ein anspruchsvolleres Design aufweist, etwa eine jeweils unterschiedliche Formgebung im Endbereich 40 und im sich an den Endbereich 40 anschließenden hinteren Bereich des Wischarms 12.

## Patentansprüche

1. Verbindungsanordnung zum Verbinden eines Wischblatts (14) mit einem Wischarm (12) für eine Scheibenwischanlage eines Fahrzeugs, mit einem zum Halten des Wischblatts (14) ausgebildeten Anbindungselement (26), welches an den Wischarm (12) in eine Montagerichtung (78) montierbar ist, welche quer zu einer durch die Wischbewegung des Wischblatts (14) definierbaren Wischfläche verläuft, wobei die Verbindungsanordnung wenigstens ein als im Querschnitt ein U-Profil aufweisender Schieber ausgebildetes Sicherungselement (22) zum lagegesicherten Halten des Anbindungselements (26) an dem Wischarm (12) aufweist,
**dadurch gekennzeichnet, dass**
das wenigstens eine Sicherungselement als an dem Wischarm (12) angeordneter, Schieber (22) ausgebildet ist, welcher entlang des Wischarms (12) aus einer das Montieren des Anbindungselements (26) ermöglichenden Montagestellung in eine das Anbindungselement (26) sichernde Funktionsstellung verschiebbar ist, wobei der Schieber (22) einen Rücken (58) und zwei Schenkel (54) aufweist und wobei an den Schenkeln (54) des Schiebers (22) wenigstens ein den Wischarm (12) unterseitig umgreifender Vorsprung (56) angeordnet ist.

2. Verbindungsanordnung nach Anspruch 1,
**dadurch gekennzeichnet, dass**
ein Endbereich des Schiebers (22) in der Montagestellung über einen Endbereich (40) des Wischarms (12) übersteht.

3. Verbindungsanordnung nach Anspruch 1 oder 2,
**dadurch gekennzeichnet, dass**
der Wischarm (12) wenigstens eine Rastkerbe (66, 68) aufweist, welche in der Funktionsstellung und/oder in der Montagestellung des Schiebers (22) mit einer an dem Schieber (22) angeordneten Rastnase (64) in Eingriff ist.

4. Verbindungsanordnung nach einem der Ansprüche 1 bis 3,
**dadurch gekennzeichnet, dass**
der Wischarm (12) zumindest im Bereich des Anbindungselements (26) im Querschnitt ein U-Profil aufweist, wobei in einem Rücken (42) des Wischarms (12) eine Durchtrittsöffnung (52) angeordnet ist, in welcher in der Montagestellung ein korrespondierender Vorsprung (32) des Anbindungselements (26) aufgenommen ist.

5. Verbindungsanordnung nach Anspruch 4,
**dadurch gekennzeichnet, dass**
zumindest ein Teilbereich (30) des Vorsprungs (32) eine Kontur aufweist, welche einer Kontur einer an dem Schieber (22) vorgesehenen Ausnehmung (28) gleich ist, wobei zumindest der Teilbereich (30) des Vorsprungs (32) in der Funktionsstellung des Schiebers (22) mit der Ausnehmung (28) in Anlage ist.

6. Verbindungsanordnung nach einem der Ansprüche 1 bis 5,
**dadurch gekennzeichnet, dass**
der Wischarm (12) wenigstens eine in die Montagerichtung (78) offene Ausnehmung (46) aufweist, welche zum Aufnehmen eines an dem Anbindungselement (26) ausgebildeten korrespondierenden Vorsprungs (48) ausgebildet ist.

7. Verbindungsanordnung nach einem der Ansprüche 1 bis 6,
**dadurch gekennzeichnet, dass**
das Anbindungselement (26) ein das Wischblatt (14) haltendes Unterteil (16) und ein in der Funktionsstellung an dem Wischarm (12) festgelegtes Oberteil (34) umfasst, wobei das Unterteil (16) relativ zu dem Oberteil (34) bewegbar an diesem gehalten ist.

8. Verbindungsanordnung nach Anspruch 7,
**dadurch gekennzeichnet, dass**
das Oberteil als Wippe (34) ausgebildet ist, welche auf einem durch eine Durchgangsöffnung (38) in dem Unterteil (16) hindurchgeführten Stift (36) drehbar gelagert ist.

9. Verbindungsanordnung nach Anspruch 7 oder 8,
**gekennzeichnet durch**
wenigstens einen an dem Unterteil (16) ausgebildeten Anschlag (82) zum Begrenzen der Relativbewegung des Oberteils (34) gegenüber dem Unterteil (16).

10. Verfahren zum Verbinden eines Wischblatts (14) mit einem Wischarm (12) für eine Scheibenwischanlage eines Fahrzeugs, bei welchem ein zum Halten des Wischblatts (14) ausgebildetes Anbindungselement (26) an den Wischarm (12) in eine Montagerichtung (78) montiert wird, welche quer zu einer durch die Wischbewegung des Wischblatts definierbaren Wischfläche verläuft und bei welchem mittels wenigstens eines als im Querschnitt ein U-Profil aufweisender Schieber ausgebildetes Sicherungselements (22) das Anbindungselement (26) an dem Wischarm (12) lagegesichert gehalten wird,
**dadurch gekennzeichnet, dass**
als Sicherungselement ein an dem Wischarm (12) angeordneter, Schieber (22) entlang des Wischarms (12) aus einer das Montieren des Anbindungselements (26) ermöglichenden Montagestellung in eine das Anbindungselement (26) sichernde Funktionsstellung verschoben wird.

## Claims

1. Connecting arrangement for connecting a wiper blade (14) to a wiper arm (12) for a windscreen wiper system of a vehicle, comprising a connecting element (26) designed for holding the wiper blade (14), which connecting element (26) can be mounted on the wiper arm (12) in a mounting direction (78) extending at right angles to a wiping surface which can be defined by the wiping movement of the wiper blade (14), wherein the connecting arrangement comprises at least one securing element (22) designed as a slide having a U-profile in cross-section for the positionally secure location of the connecting element (26) on the wiper arm (12),
**characterised in that**
the at least one securing element is designed as a slide (22) located on the wiper arm (12) and having a U-profile in cross-section, which can be moved along the wiper arm (12) from a mounting position allowing the installation of the connecting element (26) into a functional position in which the connecting element (26) is secured, the slide (22) having a back (58) and two legs (54), and at least one projection (56) engaging the wiper arm (12) from below being provided on the legs (54) of the slide (22).

2. Connecting arrangement according to claim 1,
**characterised in that**
an end region of the slide (22) projects beyond an end region (40) of the wiper arm (12) in the mounting position.

3. Connecting arrangement according to claim 1 or 2,
**characterised in that**
the wiper arm (12) has at least one latching notch (66, 68) which is in engagement with a latching lug (64) provided on the slide (22) in the functional position and/or in the mounting position of the slide (22).

4. Connecting arrangement according to any of claims 1 to 3,
**characterised in that**
the wiper arm (12) has a U-profile in cross-section at least in the region of the connecting element (26), wherein a through opening (52) in which a corresponding projection (32) of the connecting element (26) is accommodated in the mounting position is provided in a back (42) of the wiper arm (12).

5. Connecting arrangement according to claim 4,
**characterised in that**
at least a part-region (30) of the projection (32) has a contour which is equal to a contour of a recess (28) provided on the slide (22), at least the part-region (30) of the projection (32) being in contact with the recess (28) in the functional position of the slide (22).

6. Connecting arrangement according to any of claims 1 to 5,
**characterised in that**
the wiper arm (12) has at least one recess (46) open in the mounting direction (78), which is designed for the accommodation of a corresponding projection (48) formed on the connecting element (26).

7. Connecting arrangement according to any of claims 1 to 6,
**characterised in that**
the connecting element (26) comprises a lower part (16) holding the wiper blade (14) and an upper part (34) located on the wiper arm (12) in the functional position, the lower part (16) being held on the upper part (34) while being movable relative thereto.

8. Connecting arrangement according to claim 7,
**characterised in that**
the upper part is designed as a rocker (34) which is rotatably mounted on a pin (36) passing through a through opening (38) in the lower part (16).

9. Connecting arrangement according to claim 7 or 8,
**characterised by**
at least one stop (82) formed on the lower part (16) for limiting the movement of the upper part (34) relative to the lower part (16).

10. Method for connecting a wiper blade (14) to a wiper arm (12) for a windscreen wiper system of a vehicle, wherein a connecting element (26) designed for holding the wiper blade (14) is mounted on the wiper arm (12) in a mounting direction (78) extending at right angles to a wiping surface which can be defined by the wiping movement of the wiper blade (14), and wherein the connecting element (26) is held on the wiper arm (12) in a secure position by means of a securing element (22) designed as a slide having a U-profile in cross-section,
**characterised in that**
a slide (22) located on the wiper arm (12) and having a U-profile in cross-section is moved along the wiper arm (12) from a mounting position allowing the installation of the connecting element (26) into a functional position in which the connecting element (26) is secured to act as a securing element.

## Revendications

1. Système d'assemblage destiné à assembler un balai d'essuie-glace (14) à un bras d'essuie-glace (12) d'un système d'essuie-glace d'un véhicule, un élément de liaison (26) conçu pour maintenir le balai d'essuie-glace (14) pouvant être monté sur le bras d'essuie-glace (12) dans une direction de montage (78) qui s'étend perpendiculairement à une surface d'essuyage pouvant être définie par le mouvement d'essuyage du balai d'essuie-glace (14), le système d'assemblage comprenant au moins un élément de blocage (22) conçu comme un verrou présentant en coupe transversale un profil en U, ledit élément de blocage sert à maintenir l'élément de liaison (26) sur le bras d'essuie-glace (12) dans une position fixe, **caractérisé en ce que** l'au moins un élément de liaison est conçu comme un verrou (22) disposé sur le bras d'essuie-glace, lequel peut être déplacé le long du bras d'essuie-glace (12) d'une position de montage permettant le montage de l'élément de liaison (26) à une position de fonctionnement dans laquelle l'élément de liaison (26) est bloqué, le verrou (26) présentant une partie arrière (58) et deux branches (54) et au moins une partie saillante (56) enveloppant le bras d'essuie-glace (12) sur sa face inférieure étant disposée sur les branches (54) du verrou (22).

2. Système d'assemblage selon la revendication 1, **caractérisé en ce qu'**une zone d'extrémité du verrou (22) fait saillie dans la position de montage au-dessus d'une zone d'extrémité (40) du bras d'essuie-glace (12).

3. Système d'assemblage selon la revendication 1 ou la revendication 2, **caractérisé en ce que** le bras d'essuie-glace (12) présente au moins une encoche d'enclenchement (66, 68) dans laquelle dans la position de fonctionnement et/ou dans la position de montage du verrou (22) vient s'insérer un tenon d'enclenchement (64) disposé sur le verrou (22).

4. Système d'assemblage selon l'une quelconque des revendications 1 à 3, **caractérisé en ce que** le bras d'essuie-glace (12) présente au moins dans la zone de l'élément de liaison (26) un profil en U en coupe transversale, dans une partie arrière (42) du bras d'essuie-glace (12) étant aménagée une ouverture de passage (52), dans laquelle est logée dans la position de montage une partie saillante (32) correspondante de l'élément de liaison (26).

5. Système d'assemblage selon la revendication 4, **caractérisé en ce que** au moins une zone partielle (30) de la partie saillante (32) présente un contour, qui est identique à un contour d'un évidemment (28) aménagé sur le verrou (22), au moins la zone partielle (30) de la partie en saillie (32) étant en butée avec l'évidemment (28) lorsque le verrou (22) est dans la position de fonctionnement.

6. Système d'assemblage selon l'une quelconque des revendications 1 à 5, **caractérisé en ce que** le bras d'essuie-glace (12) présente au moins un évidemment (46) ouvert dans la direction de montage (78), ledit évidemment étant conçu pour loger une partie saillante (48) correspondante disposée sur l'élément de liaison (26).

7. Système d'assemblage selon l'une quelconque des revendications 1 à 6, **caractérisé en ce que** l'élément de liaison (26) comprend une partie inférieure (16) maintenant le balai d'essuie-glace (14) et une partie supérieure (34) fixée à demeure sur le bras d'essuie-glace (12) dans la position de fonctionnement, la partie inférieure (16) étant montée mobile sur celui-ci par rapport à la partie supérieure (34).

8. Système d'assemblage selon la revendication 7, **caractérisé en ce que** la partie supérieure est conçue comme bascule (34) montée à pivotement sur une tige (36) passant à travers une ouverture de passage (38) dans la partie inférieure (16).

9. Système d'assemblage selon la revendication 7 ou la revendication 8, **caractérisé par** au moins une butée (82) conçue sur la partie inférieure (16) pour limiter le mouvement relatif de la partie supérieure (34) par rapport à la partie inférieure (16).

10. Procédé destiné à assembler un balai d'essuie-glace (14) doté d'un bras d'essuie-glace (12) pour un système d'essuie-glace d'un véhicule, selon lequel un élément de liaison (26) conçu pour maintenir le balai d'essuie-glace (14) est monté sur le bras d'essuie-glace (12) dans une direction de montage (78), laquelle s'étend perpendiculairement à une surface d'essuyage pouvant être définie par le mouvement d'essuyage du balai d'essuie-glace et selon lequel au moyen d'au moins un élément de liaison (22) présentant un profil en U en coupe transversal , l'élément de liaison (26) est maintenu en position fixe sur le bras d'essuie-glace (12), **caractérisé en ce qu'**en tant qu'élément de fixation un verrou (22) disposé sur le bras d'essuie-glace (12) est poussé le long du bras d'essuie-glace (12) d'une position de montage permettant le montage de l'élément de liaison (26) dans une position de fonctionnement permettant le blocage de l'élément de liaison (26).
